# EUROPÄISCHE PATENTSCHRIFT

(11) **EP 3 133 688 B1**
(45) Veröffentlichungstag und Bekanntmachung des Hinweises auf die Patenterteilung: **27.02.2019**
(21) Anmeldenummer: 16184058.2
(22) Anmeldetag: 12.08.2016
(51) Int. Cl.: H01M 8/04223, H01M 8/1018

(54) **BRENNSTOFFZELLENVORRICHTUNG UND VERFAHREN ZUM BETRIEB EINER BRENNSTOFFZELLENVORRICHTUNG**
FUEL CELL DEVICE AND METHOD FOR OPERATING A FUEL CELL DEVICE
DISPOSITIF À PILE À COMBUSTIBLE ET PROCÉDÉ DE FONCTIONNEMENT D'UN DISPOSITIF À PILE À COMBUSTIBLE

(30) Priorität: 19.08.2015 DE 102015215821
(43) Veröffentlichungstag der Anmeldung: 22.02.2017
(73) Patentinhaber: Deutsches Zentrum für Luft- und Raumfahrt e.V., 51147 Köln (DE)
(72) Erfinder: Schirmer, Johannes, 71549 Auenwald (DE)
(74) Vertreter: Hoeger, Stellrecht & Partner Patentanwälte mbB

(56) Entgegenhaltungen:
- DE-A1- 10 137 847
- DE-T5- 10 392 729
- US-A- 6 068 941
- US-A1- 2010 310 954

## Beschreibung

Die vorliegende Erfindung betrifft eine Brennstoffzellenvorrichtung, insbesondere eine Wasserstoff-Polymerelektrolytmembran-Brennstoffzellenvorrichtung (H₂-PEM-Brennstoffzellenvorrichtung).

Brennstoffzellenvorrichtungen sind beispielsweise aus folgenden Druckschriften bekannt:
DE 103 92 922 T5, US 7,108,937 B2, DE 11 2011 103 451 T5,
DE 10 2011 014 154 A1, WO 2005/101561 A3; US 2008/0299429 A1,
US 2005/0277003 A1, US 2005/0227126 A1, US 7,393,602 B2,
US 6,596,426 B2, WO 2010/132050 A1, WO 2009/104368 A1,
WO 2007/117018 A1, WO 2007/063785 A1, US 6,103,410 A;
KR 10-2008-059673 A, JP 2008-262822 A, JP 2007-294186 A,
DE 103 92 729 T5, DE 101 37 847 A1, US 6,068,941 A, US 2010/0310954 A1.

Bei Brennstoffzellenvorrichtungen ist insbesondere der Kaltstart, das heißt ein Start der gesamten Anlage bei Temperaturen unterhalb des Gefrierpunktes von Wasser, problematisch. Beispielsweise kann gefrierendes Wasser zu Schäden führen.

Um eine Beschädigung und/oder eine Degradation aufgrund des Kaltstarts zu vermeiden, können verschiedene Maßnahmen vorgesehen sein. Beispielsweise kann ein Brennstoffzellenstack der Brennstoffzellenvorrichtung mittels einer separaten Heizvorrichtung vorgewärmt werden. Die Brennstoffzellenvorrichtung wird dann vorzugsweise erst in einen stromerzeugenden Betrieb (Normalbetrieb) versetzt, wenn die erforderliche Betriebstemperatur (weit) oberhalb des Gefrierpunkts erreicht ist.

Der vorliegenden Erfindung liegt die Aufgabe zugrunde, eine Brennstoffzellenvorrichtung bereitzustellen, welche unbeschadet auf tiefe Temperaturen, insbesondere unterhalb von 0°Celsius, abgekühlt und/oder bei tiefen Temperaturen, insbesondere unterhalb von 0°Celsius, gelagert werden kann und einen optimierten Kaltstart ermöglicht.

Diese Aufgabe wird erfindungsgemäß durch eine Brennstoffzellenvorrichtung gemäß Anspruch 1 gelöst.

Dadurch, dass erfindungsgemäß ein Vorbereitungsbetrieb vorgesehen ist, bei welchem die Anodenseite und/oder die Kathodenseite mit einem Füllstoff befüllbar oder befüllt sind, kann die Brennstoffzellenvorrichtung einfach für tiefe Temperaturen vorbereitet werden. Zudem kann der Füllstoff vorzugsweise genutzt werden, um die Brennstoffzellenvorrichtung zu erhitzen und/oder um bei tiefen Temperaturen, insbesondere nahe und unter dem Gefrierpunkt von Wasser, elektrische Energie zu erzeugen (elektrische Leistung bereitzustellen). Die erfindungsgemäße Brennstoffzellenvorrichtung bietet somit vorzugsweise einen optimierten Kaltstart. Ferner ist die erfindungsgemäße Brennstoffzellenvorrichtung vorzugsweise unbeschadet auf tiefe Temperaturen, insbesondere unterhalb von 0°Celsius, abkühlbar und/oder bei tiefen Temperaturen, insbesondere unterhalb von 0°Celsius, lagerbar.

Im Heizbetrieb reagiert der Oxidator vorzugsweise mit den chemisch reaktiven Bestandteilen des Füllstoffs im Bereich einer Membran-Elektrodeneinheit (MEA) der Brennstoffzellenvorrichtung, insbesondere ist hierbei eine katalytische Reaktion oder katalytisch unterstützte Reaktion vorgesehen.

Die Brennstoffzellenvorrichtung ist mittels der Steuervorrichtung vorzugsweise ferner wahlweise (d) in einen Leistungsbetrieb versetzbar, in welchem der Füllstoff als Brennstoff der Brennstoffzellenvorrichtung zur Erzeugung von elektrischer Energie und/oder zur Erzeugung von Wärme nutzbar ist oder genutzt wird.

Der Heizbetrieb kann bei einer Ausgestaltung der Erfindung zugleich der Leistungsbetrieb sein. Es kann jedoch auch vorgesehen sein, dass im Heizbetrieb keine elektrische Energie, sondern lediglich Wärme erzeugt und/oder bereitgestellt wird.

Vorteilhaft kann es sein, wenn die Brennstoffzellenvorrichtung einen Füllstoffbehälter umfasst, aus welchem der Füllstoff entnehmbar und der Kathodenseiten und/oder der Anodenseite zuführbar ist.

Alternativ oder ergänzend hierzu kann vorgesehen sein, dass die Brennstoffzellenvorrichtung einen Füllstoffbehälter umfasst, in welchen der Füllstoff von der Kathodenseite und/oder der Anodenseite zurückführbar ist.

Die Füllvorrichtung umfasst vorzugsweise eine Zuführvorrichtung zum Zuführen von Füllstoff zu der Kathodenseite und/oder der Anodenseite.

Günstig kann es sein, wenn die Füllvorrichtung ferner eine Abführvorrichtung zum Abführen von Füllstoff von der Kathodenseite und/oder der Anodenseite umfasst.

Es kann vorgesehen sein, dass die Füllvorrichtung eine Rückführvorrichtung zum Rückführen von Füllstoff von der Kathodenseite und/oder der Anodenseite zu dem Füllstoffbehälter umfasst.

Insbesondere zum Fördern von Füllstoff von dem Füllstoffbehälter zu der Kathodenseite und/oder der Anodenseite und/oder von der Kathodenseite und/oder der Anodenseite zurück zu dem Füllstoffbehälter ist vorzugsweise vorgesehen, dass die Füllvorrichtung eine Pumpe oder ein sonstiges Fluidantriebselement umfasst.

Die Füllvorrichtung ist vorzugsweise keine kontinuierliche Umwälzvorrichtung, sondern vielmehr eine statische Füllvorrichtung zum wahlweisen Befüllen oder Entleeren der Kathodenseite und/oder der Anodenseite mit Füllstoff.

Es kann jedoch auch vorgesehen sein, dass die Füllvorrichtung wahlweise (a) in einem Füllbetrieb zum statischen Befüllen der Kathodenseite und/oder der Anodenseite und (b) in einem Umwälzbetrieb zum kontinuierlichen Umwälzen des der Kathodenseite und/oder der Anodenseite zugeführten Füllstoffs betreibbar ist, insbesondere gesteuert mittels der Steuervorrichtung.

Beispielsweise in dem Heizbetrieb und/oder in dem Leistungsbetrieb kann vorgesehen sein, dass die Füllvorrichtung in einem Umwälzbetrieb betreibbar ist, in welchem durch die Anodenseite kontinuierlich Füllstoff hindurchgeführt wird, während beispielsweise auf der Kathodenseite Oxidator zugeführt wird.

Der Füllstoff ist vorzugsweise ein Gemisch, welches Wasser und einen von Wasser verschiedenen Zusatzstoff umfasst oder durch Wasser und einen von Wasser verschiedenen Zusatzstoff gebildet ist.

Das Gemisch ist insbesondere ein homogenes Gemisch.

Der Füllstoff ist eine Flüssigkeit.

Es kann vorgesehen sein, dass die Brennstoffzellenvorrichtung einen Zusatzstoffbehälter zur Aufnahme eines Zusatzstoffs umfasst, welcher zur Erhöhung einer Konzentration des Zusatzstoffs in dem Füllstoff einem Füllstoffbehälter der Brennstoffzellenvorrichtung zuführbar ist, insbesondere gesteuert und/oder geregelt mittels der Steuervorrichtung.

Im Betrieb der Brennstoffzellenvorrichtung kann es zu einem Verdünnungseffekt kommen, wenn der Füllstoff mehrfach der Kathodenseite und/oder der Anodenseite zugeführt und von derselben zurück in den Füllstoffbehälter zurückgeführt wird. Insbesondere kann sich im Brennstoffzellenstack der Brennstoffzellenvorrichtung entstandenes Wasser mit dem Füllstoff vermischen und somit zur Verdünnung des Füllstoffs beitragen. Durch gesteuerte und/oder geregelte Zuführung des Zusatzstoffs zu dem Füllstoffbehälter kann vorzugsweise eine eingestellte und/oder vorgegebene Mindestkonzentration des Zusatzstoffs gewährleistet werden. Insbesondere kann hierdurch vorzugsweise vermieden werden, dass ein Festpunkt (Gefrierpunkt) des Füllstoffs unerwünscht stark ansteigt.

Der Füllstoff und/oder ein Zusatzstoff, welcher Bestandteil des Füllstoffs ist, ist vorzugsweise wasserlöslich.

Vorteilhaft kann es sein, wenn der Füllstoff und/oder der Zusatzstoff einen im Vergleich zu Wasser oder als Gemisch mit Wasser geringeren Festpunkt aufweist als Wasser.

Der Füllstoff ist beispielsweise ein Alkohol, insbesondere Methanol, Ethanol, Ethylenglykol oder Isopropanol. Ferner kann vorgesehen sein, dass der Füllstoff einen Alkohol, insbesondere Methanol, Ethanol, Ethylenglykol oder Isopropanol, umfasst.

Vorzugsweise ist der Zusatzstoff ein Alkohol. Gemeinsam mit Wasser bildet der Zusatzstoff vorzugsweise den Füllstoff.

Es kann vorgesehen sein, dass der Füllstoff eine Flüssigkeit ist oder umfasst, welche insbesondere durch eine Brennstoffzellenmembran der Brennstoffzellenvorrichtung hindurchdiffundieren kann.

Insbesondere kann vorgesehen sein, dass ein Zusatzstoff, beispielsweise ein Alkohol, des Füllstoffs durch eine Brennstoffzellenmembran der Brennstoffzellenvorrichtung hindurchdiffundieren kann.

Der Füllstoff weist vorzugsweise einen Festpunkt (Gefrierpunkt) von weniger als ungefähr -20°Celsius, insbesondere weniger als ungefähr -30°Celsius, beispielsweise weniger als ungefähr -40°Celsius, auf.

Es kann vorgesehen sein, dass im Vorbereitungsbetrieb die Anodenseite und/oder die Kathodenseite abgesperrt oder absperrbar sind, so dass der Füllstoff nach dem Füllen der Anodenseite und/oder der Kathodenseite stationär auf der Anodenseite und/oder auf der Kathodenseite verbleibt.

Die Brennstoffzellenvorrichtung ist eine Wasserstoff-Brennstoffzellenvorrichtung, bei welcher als Hauptbrennstoff Wasserstoff oder wasserstoffhaltiges Gas vorgesehen ist. Insbesondere ist die Brennstoffzellenvorrichtung eine Wasserstoff-Polymerelektrolytmembran-Brennstoffzellenvorrichtung.

Die Steuervorrichtung ist vorzugsweise derart ausgebildet und/oder eingerichtet, dass die Brennstoffzellenvorrichtung insbesondere in einem oder mehreren der nachstehend genannten Verfahren betreibbar ist.

Der vorliegenden Erfindung liegt die weitere Aufgabe zugrunde, ein Verfahren zum Betreiben einer Brennstoffzellenvorrichtung bereitzustellen, welches eine unbeschadete Abkühlung und/oder Lagerung der Brennstoffzellenvorrichtung auf tiefe Temperaturen beziehungsweise bei tiefen Temperaturen, insbesondere unterhalb von 0°Celsius, und einen optimierten Kaltstart ermöglicht.

Diese Aufgabe wird erfindungsgemäß durch ein Verfahren gemäß Anspruch 10 gelöst.

Unter einem Befüllen der Anodenseite und/oder der Kathodenseite mit dem Füllstoff ist insbesondere kein kontinuierliches Hindurchleiten von Füllstoff durch die Kathodenseite und/oder die Anodenseite zu verstehen. Vielmehr ist ein Befüllen ein Zuführen von Füllstoff, welcher dann zumindest temporär stationär auf der Anodenseite und/oder der Kathodenseite verbleibt, vorzugsweise mindestens bis zur Beendigung des Vorbereitungsbetriebs und/oder bis zur Einleitung des Heizbetriebs.

Das erfindungsgemäße Verfahren weist vorzugsweise einzelne oder mehrere der im Zusammenhang mit der erfindungsgemäßen Brennstoffzellenvorrichtung beschriebenen Merkmale und/oder Vorteile auf.

Günstig kann es sein, wenn die erfindungsgemäße Brennstoffzellenvorrichtung derart ausgebildet und/oder eingerichtet ist, dass das erfindungsgemäße Verfahren darauf durchführbar ist.

Die Brennstoffzellenvorrichtung wird mittels der Steuervorrichtung vorzugsweise ferner wahlweise (d) in einem Leistungsbetrieb betrieben, in welchem der Füllstoff als Brennstoff der Brennstoffzellenvorrichtung zur Erzeugung von elektrischer Energie und/oder zur Erzeugung von Wärme genutzt wird.

Der Heizbetrieb kann bei einer Ausgestaltung der Erfindung zugleich der Leistungsbetrieb sein. Es kann jedoch auch vorgesehen sein, dass im Heizbetrieb keine elektrische Energie, sondern lediglich Wärme erzeugt und/oder bereitgestellt wird.

Der chemisch reaktive Bestandteil des Füllstoffs, welcher exotherm mit dem Oxidator reagiert, ist vorzugsweise ein von der Anodenseite durch die Brennstoffzellenmembran hindurchdiffundierender Bestandteil des Füllstoffs. Insbesondere ist dies ein Zusatzstoff.

In dem Heizbetrieb wird der Füllstoff vorzugsweise nur von der Kathodenseite abgelassen, bevor der Kathodenseite Oxidator zugeführt wird. Noch auf der Kathodenseite verbleibender Rest-Füllstoff und/oder von der Anodenseite auf die Kathodenseite diffundierender Füllstoff wird vorzugsweise zur Wärmeerzeugung mit Oxidator umgesetzt.

Es kann vorgesehen sein, dass mittels einer Sensorvorrichtung der Brennstoffzellenvorrichtung eine Konzentration eines Zusatzstoffs in dem Füllstoff ermittelbar ist. Insbesondere kann hierbei vorgesehen sein, dass mittels einer Sensorvorrichtung ein Festpunkt (Gefrierpunkt) des Füllstoffs bestimmt und mit einem vorgegebenen Sollwert verglichen wird.

Vorteilhaft kann es sein, wenn im Fall einer ermittelten zu geringen Konzentration des Zusatzstoffs in dem Füllstoff reiner oder hochkonzentrierter Zusatzstoff aus einem Zusatzstoffbehälter einem Füllstoffbehälter zur Aufnahme des Füllstoffs zugeführt wird.

Vorteilhaft kann es sein, wenn die Zuführung des Zusatzstoffs zu dem Füllstoffbehälter gesteuert und/oder geregelt wird, insbesondere mittels der Steuervorrichtung und abhängig von Messwerten der Sensorvorrichtung.

Erfindungsgemäß ist vorgesehen, dass die Kathodenseite und/oder die Anodenseite im Vorbereitungsbetrieb derart vollständig mit dem Füllstoff geflutet werden, dass der Oxidator und/oder der Hauptbrennstoff vollständig von der Kathodenseite und/oder der Anodenseite verdrängt werden.

Es kann vorgesehen sein, dass im Vorbereitungsbetrieb zumindest die Membran-Elektroden-Einheiten (MEA) kathodenseitig und/oder anodenseitig derart vollständig mit dem Füllstoff geflutet werden, dass der Oxidator und/oder der Hauptbrennstoff vollständig kathodenseitig und/oder anodenseitig von den Membran-Elektroden-Einheiten (MEA) verdrängt werden.

Es kann vorgesehen sein, dass die Füllvorrichtung wahlweise (a) in einem Füllbetrieb zum statischen Befüllen der Kathodenseite und/oder der Anodenseite und (b) in einem Umwälzbetrieb zum kontinuierlichen Umwälzen des der Kathodenseite und/oder der Anodenseite zugeführten Füllstoffs betrieben wird, insbesondere gesteuert mittels der Steuervorrichtung.

Beispielsweise in dem Heizbetrieb und/oder in dem Leistungsbetrieb kann vorgesehen sein, dass die Füllvorrichtung in einem Umwälzbetrieb betrieben wird, in welchem durch die Anodenseite kontinuierlich Füllstoff hindurchgeführt wird, während beispielsweise auf der Kathodenseite Oxidator zugeführt wird.

Ferner können die erfindungsgemäße Brennstoffzellenvorrichtung und/oder das erfindungsgemäße Verfahren einzelne oder mehrere der nachfolgend beschriebenen Merkmale und/oder Vorteile aufweisen:
Die Brennstoffzellenvorrichtung ist vorzugsweise optimiert für Wasserstoff als Hauptbrennstoff.

Im Heizbetrieb der Brennstoffzellenvorrichtung wird vorzugsweise keine elektrische Energie oder lediglich eine geringe Menge elektrischer Energie erzeugt. Die Umsetzung des Füllstoffs mit dem Oxidator dient vorzugsweise ausschließlich der Wärmeerzeugung, insbesondere durch Umsetzung auf der Kathodenseite.

Die Brennstoffzellenvorrichtung ist vorzugsweise im Heizbetrieb und/oder im Leistungsbetrieb betreibbar, bis der Brennstoffzellenstack (Brennstoffzellenstapel) der Brennstoffzellenvorrichtung eine Temperatur von mindestens ungefähr 0°Celsius, vorzugsweise mindestens ungefähr +5°Celsius, insbesondere mindestens ungefähr +10°Celsius, beispielsweise mindestens ungefähr +15°Celsius, aufweist.

Erst nach Durchführung des Heizbetriebs und/oder des Leistungsbetriebs und/oder erst nach Erreichung einer gewünschten Temperatur wird die Brennstoffzellenvorrichtung vorzugsweise in den Normalbetrieb versetzt. Insbesondere wird vorzugsweise erst dann unter Verwendung des Hauptbrennstoffs, insbesondere Wasserstoff (H₂) oder wasserstoffhaltiges Gas, mittels der Brennstoffzellenvorrichtung elektrische Energie erzeugt.

Im Heizbetrieb und/oder im Leistungsbetrieb der Brennstoffzellenvorrichtung wird vorzugsweise kein Hauptbrennstoff, insbesondere kein Wasserstoff oder wasserstoffhaltiges Gas, zu der Anodenseite zugeführt.

Durch das Fluten der Kathodenseite und/oder der Anodenseite im Vorbereitungsbetrieb wird vorzugsweise ein Einfrieren und/oder eine Eisbildung in den Komponenten: Membran, Katalytschicht, Gasdiffusionslage, Zellkanäle, Manifolds, Leitungen, Ventilen und/oder Sensoren sowohl auf der Anoden- als auch auf der Kathodenseite vermieden. Hierdurch kann vorzugsweise eine Beschädigung und/oder eine Degradation dieser Komponenten wirksam verhindert werden. Zudem kann hierdurch vorzugsweise eine mechanische Störung und/oder Fehlmessung aufgrund eingefrorener Leitungen, Ventile oder Sensoren vermieden werden.

Der Füllstoff verbleibt vorzugsweise solange auf der Anodenseite und/oder auf der Kathodenseite, bis die Temperaturen, insbesondere die Umgebungstemperaturen und/oder die Brennstoffzellenstacktemperatur, sich oberhalb des Gefrierpunkts befinden oder bis die Brennstoffzellenvorrichtung trotz Temperaturen unterhalb des Gefrierpunkts im Normalbetrieb gestartet werden soll.

Zur Beschleunigung des Aufheizvorgangs kann vorgesehen sein, dass im Heizbetrieb die Brennstoffzellenvorrichtung elektrisch belastet wird, so dass entgegen einem Normalbetrieb der Brennstoffzellenstack als Direkt-Methanol-Brennstoffzelle betrieben wird, insbesondere dann, wenn der Füllstoff Methanol umfasst. Auch hierdurch kann eine exotherme Reaktion zur Wärmeproduktion genutzt werden.

Da die Materialien der Brennstoffzellenvorrichtung vorzugsweise auf den Reaktionsprozess einer mit Wasserstoff betriebenen Polymerelektrolytmembran-Brennstoffzellenvorrichtung ausgelegt sind, läuft die Reaktion vorzugsweise elektrisch ineffizient ab, was eine hohe Wärmeerzeugung bedeutet und im Heizbetrieb auch wünschenswert sein kann.

Die erfindungsgemäße Brennstoffzellenvorrichtung eignet sich vorzugsweise zur Verwendung in mobilen, portablen und/oder stationären Anwendungen, beispielsweise für Kraftfahrzeuge und/oder Luftfahrzeuge.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Darstellung einer Brennstoffzellenvorrichtung, welche eine Füllvorrichtung umfasst und einen optimierten Kaltstart ermöglicht;
- Fig. 2: eine der Fig. 1 entsprechende schematische Darstellung der Brennstoffzellenvorrichtung, wobei die Brennstoffzellenvorrichtung in einem Normalbetrieb zur Stromerzeugung betrieben wird;
- Fig. 3: eine der Fig. 1 entsprechende schematische Darstellung der Brennstoffzellenvorrichtung, wobei die Brennstoffzellenvorrichtung in einem Vorbereitungsbetrieb betrieben wird;
- Fig. 4: eine der Fig. 1 entsprechende schematische Darstellung der Brennstoffzellenvorrichtung, wobei die Brennstoffzellenvorrichtung in einem Heizbetrieb betrieben wird; und
- Fig. 5: eine der Fig. 1 entsprechende schematische Darstellung der Brennstoffzellenvorrichtung, wobei die Brennstoffzellenvorrichtung in einem Leistungsbetrieb betrieben wird.

Gleiche oder funktional äquivalente Elemente sind in sämtlichen Figuren mit denselben Bezugszeichen versehen.

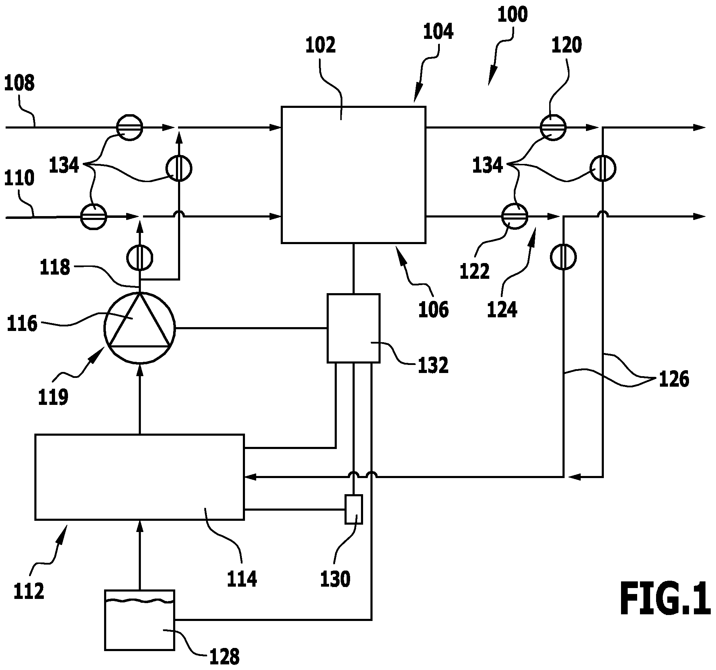

Eine in den Fig. 1 bis 4 dargestellte Ausführungsform einer als Ganzes mit 100 bezeichneten Brennstoffzellenvorrichtung ist vorzugsweise eine Polymerelektrolytmembran-Brennstoffzellenvorrichtung (PEM-Brennstoffzellenvorrichtung), welche für einen Normalbetrieb mit einem Hauptbrennstoff, insbesondere Wasserstoff, ausgelegt ist.

Die Brennstoffzellenvorrichtung 100 umfasst als solche einen Brennstoffzellenstapel 102 (Brennstoffzellenstack), welcher eine Anodenseite 104 und eine Kathodenseite 106 aufweist.

Der Anodenseite 104 ist mittels einer Hauptbrennstoffzuführung 108 der Hauptbrennstoff zuführbar.

Der Kathodenseite 106 ist mittels einer Oxidatorzuführung 110 Oxidator zuführbar.

Mittels einer nicht dargestellten Membran-Anoden-Anordnung (MEA) sind innerhalb des Brennstoffzellenstapels 102 der Hauptbrennstoff und der Oxidator zur Erzeugung von elektrischer Energie umsetzbar.

Insbesondere beim Betrieb der Brennstoffzellenvorrichtung 100 mit Wasserstoff (H₂) als Hauptbrennstoff und Sauerstoff (O₂) als Oxidator entsteht innerhalb des Brennstoffzellenstapels 102 Wasser (H₂O). Dieses Wasser kann zu Beeinträchtigungen führen, wenn die Brennstoffzellenvorrichtung 100 unter den Gefrierpunkt von Wasser (unter 0°Celsius) abgekühlt wird und bei derartigen tiefen Temperaturen gelagert und/oder gestartet werden soll.

Um eventuelle Beschädigungen hierbei zu vermeiden und eine zuverlässige Lagerung und/oder einen zuverlässigen Kaltstart zu ermöglichen, umfasst die Brennstoffzellenvorrichtung 100 eine Füllvorrichtung 112.

Die Füllvorrichtung 112 umfasst einen Füllstoffbehälter 114 zur Aufnahme eines Füllstoffs.

Ferner umfasst die Füllvorrichtung 112 vorzugsweise eine Pumpe 116 sowie eine oder mehrere Zuführleitungen 118.

Gegebenenfalls mittels der Pumpe 116 und der Zuführleitungen 118 ist ein Füllstoff aus dem Füllstoffbehälter 114 der Füllvorrichtung 112 zu der Anodenseite 104 und/oder zu der Kathodenseite 106 des Brennstoffzellenstapels 102 zuführbar.

Die Brennstoffzellenvorrichtung 100 umfasst ferner ein Anodenauslassventil 120 und ein Kathodenauslassventil 122, welche für einen noch näher zu beschreibenden Füllvorgang verschließbar sind.

Mittels der Füllvorrichtung 112 sind somit die Anodenseite 104 und/oder die Kathodenseite 106 des Brennstoffzellenstapels 102 vorzugsweise vollständig mit dem Füllstoff füllbar, das heißt sowohl die Anodenseite 104 als auch die Kathodenseite 106 können vorzugsweise vollständig mit dem Füllstoff geflutet werden.

Mittels einer Abführvorrichtung 124 der Füllvorrichtung 112 ist der Füllstoff vorzugsweise von der Anodenseite 104 und/oder der Kathodenseite 106 des Brennstoffzellenstapels 102 entfernbar.

Mittels einer Rückführleitung 126 der Füllvorrichtung 112 ist der Füllstoff vorzugsweise zurück in den Füllstoffbehälter 114 führbar.

Bei mehrfacher Zuführung des Füllstoffs zu der Anodenseite 104 und/oder der Kathodenseiten 106 und/oder durch die oxidative und/oder elektrochemische Reaktion des Füllstoffs mit Oxidator reichert sich der Füllstoff mit Wasser an.

Der Füllstoff ist vorzugsweise ein Gemisch von Wasser und einem Zusatzstoff, insbesondere einem Alkohol, beispielsweise Methanol.

Durch das Anreichern mit Wasser und/oder durch den Verbrauch von Zusatzstoff ergibt sich eine Konzentrationsabsenkung des Zusatzstoffs in dem Füllstoff.

Um diese Konzentrationsabsenkung auszugleichen, umfasst die Brennstoffzellenvorrichtung 100 vorzugsweise einen Zusatzstoffbehälter 128, welcher reinen oder hochkonzentrierten Zusatzstoff beinhaltet. Dieser Zusatzstoff kann bei Bedarf in den Füllstoffbehälter 114 zudosiert werden, um die Konzentration des Zusatzstoffs in dem Füllstoff auf einem vorgegebenen oder gewünschten Wert zu halten.

Insbesondere kann hierbei eine Ermittlung eines Istwerts der Konzentration des Zusatzstoffs im Füllstoff mittels einer Sensorvorrichtung 130 der Brennstoffzellenvorrichtung 100 vorgesehen sein. Die Zudosierung von Zusatzstoff zu dem Füllstoffbehälter 114 erfolgt dann vorzugsweise gesteuert und/oder geregelt in Abhängigkeit von mittels der Sensorvorrichtung 130 ermittelten Istwerten und vorgegebenen Sollwerten.

Insbesondere kann für die Steuerung eine Steuervorrichtung 132 der Brennstoffzellenvorrichtung 100 vorgesehen sein.

Die Steuervorrichtung 132 dient vorzugsweise ferner der Steuerung der Hauptbrennstoffzuführung 108, der Oxidatorzuführung 110, des Brennstoffzellenstapels 102 und der Füllvorrichtung 112. Insbesondere sind mittels der Steuervorrichtung 132 vorzugsweise eine durch die Pumpe 116 und die Zuführleitung 118 gebildete Zuführvorrichtung 119 der Füllvorrichtung 112 sowie die Abführvorrichtung 124 und der Zusatzstoffbehälter 128 steuerbar und/oder regelbar.

Ferner sind mittels der Steuervorrichtung 132 mehrere Ventile 134 der Brennstoffzellenvorrichtung 100 steuerbar, insbesondere gezielt öffenbar und schließbar.

Diese Ventile 134 sind insbesondere in der Zuführleitung 118, der Hauptbrennstoffzuführung 108, der Oxidatorzuführung 110 und/oder der Rückführleitung 126 vorgesehen. Ferner sind auch das Anodenauslassventil 120 und das Kathodenauslassventil 122 Ventile 134, welche mittels der Steuervorrichtung 132 steuerbar sind.

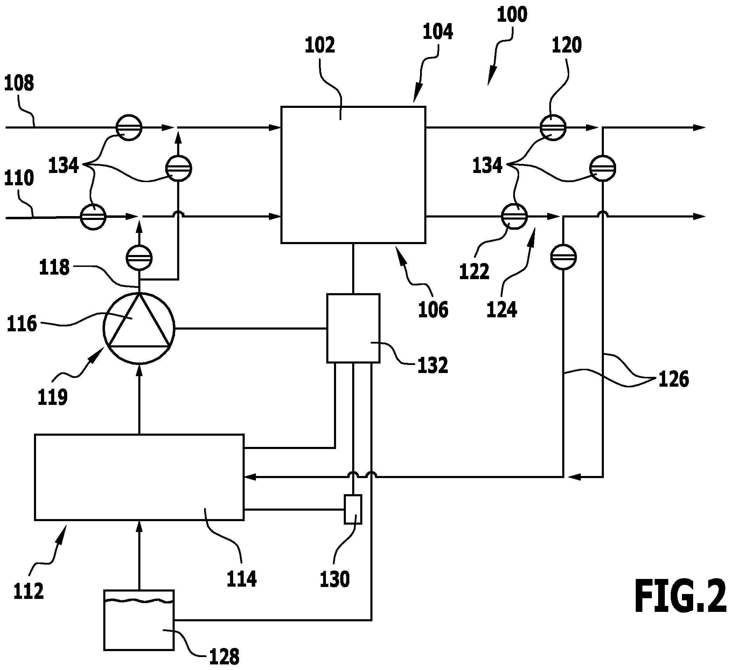

Die vorstehend beschriebene Brennstoffzellenvorrichtung 100 funktioniert wie folgt:
In einem Normalbetrieb der Brennstoffzellenvorrichtung 100, welcher in Fig. 2 dargestellt ist, wird dem Brennstoffzellenstapel 102 Hauptbrennstoff, insbesondere Wasserstoff, und Oxidator, insbesondere Sauerstoff, zugeführt.

Mittels des Brennstoffzellenstapels 102 wird hieraus elektrische Energie erzeugt. Die Anodenabgase und Kathodenabgase werden dann über das Anodenauslassventil 120 bzw. das Kathodenauslassventil 122 abgeführt.

Dieser Normalbetrieb der Brennstoffzellenvorrichtung 100 erfordert für eine hohe Dauerhaltbarkeit der Brennstoffzellenvorrichtung 100 gewisse Randbedingungen, insbesondere ist ein Betrieb innerhalb vorgegebener Temperaturbereiche vorteilhaft. Eine Umgebungstemperatur sollte vorzugsweise oberhalb des Gefrierpunkts von Wasser liegen, um die Entstehung von Eis innerhalb des Brennstoffzellenstapels 102 zu vermeiden, wenn die Brennstoffzellenvorrichtung 100 außer Betrieb genommen wird und sich aufgrund der geringen Umgebungstemperatur unter den Gefrierpunkt von Wasser abkühlt.

Ein Start und/oder eine Lagerung der Brennstoffzellenvorrichtung 100 unterhalb des Gefrierpunkts von Wasser kann zu Beschädigungen in dem Brennstoffzellenstapel 102 führen.

Die Brennstoffzellenvorrichtung 100 wird daher vorzugsweise in einen Vorbereitungsbetrieb versetzt, wenn ein Abkühlen des Brennstoffzellenstapels 102 unter den Gefrierpunkt von Wasser zu befürchten ist oder bevorsteht.

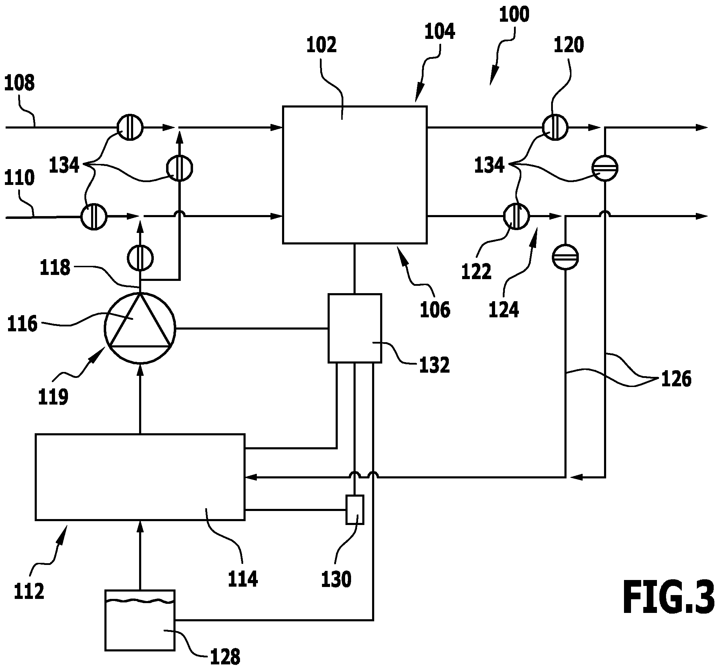

Dieser Vorbereitungsbetrieb ist in Fig. 3 dargestellt.

Bei diesem Vorbereitungsbetrieb wird Füllstoff aus dem Füllstoffbehälter 114 mittels der Pumpe 116 über die Zuführleitung 118 auf die Anodenseite 104 und/oder auf die Kathodenseite 106 geführt.

Das Anodenauslassventil 120 und das Kathodenauslassventil 122 sind dabei vorzugsweise geschlossen, so dass sowohl die Anodenseite 104 als auch die Kathodenseite 106 mit dem Füllstoff gefüllt werden.

Insbesondere wird dabei auf der Anodenseite 104 und/oder der Kathodenseite 106 noch vorhandener Hauptbrennstoff und/oder Oxidator und/oder Abgas verdrängt.

Im Vorbereitungsbetrieb wird somit sowohl die Anodenseite 104 als auch die Kathodenseite 106 vorzugsweise vollständig mit Füllstoff geflutet.

Da der Füllstoff vorzugsweise wasserlöslich ist oder Wasser aufnehmen kann und zudem vorzugsweise als Gemisch mit Wasser vorliegt, welches einen Gefrierpunkt unterhalb des Gefrierpunkts von reinem Wasser aufweist, kann der Brennstoffzellenstapel 102 unter den Gefrierpunkt von Wasser abgekühlt werden, ohne ein Einfrieren von darin enthaltenen Stoffen befürchten zu müssen. Insbesondere eine unerwünschte Eisbildung kann hierdurch wirksam vermieden werden.

Durch geeignete Wahl des Füllstoffs, insbesondere Methanol, Ethanol, Ethylenglykol oder Isopropanol, kann vorzugsweise eine Minimaltemperatur des Brennstoffzellenstapels 102 gezielt eingestellt werden. Beispielsweise kann durch Verwendung einer 40%-igen Methanollösung eine Minimaltemperatur von ungefähr -40°Celsius eingestellt werden. Das heißt, dass erst unterhalb dieser Minimaltemperatur ein unerwünschtes Einfrieren des Füllstoffs zu befürchten ist.

Durch die Durchführung des Vorbereitungsbetriebs kann die Brennstoffzellenvorrichtung somit für tiefe Temperaturen vorbereitet werden.

Wenn die Brennstoffzellenvorrichtung 100 dann jedoch in Betrieb genommen werden soll, so muss hierzu vorzugsweise ein Heizbetrieb und/oder ein Leistungsbetrieb der Brennstoffzellenvorrichtung 100 durchgeführt werden, insbesondere bevor die Brennstoffzellenvorrichtung 100 in den Normalbetrieb versetzt wird.

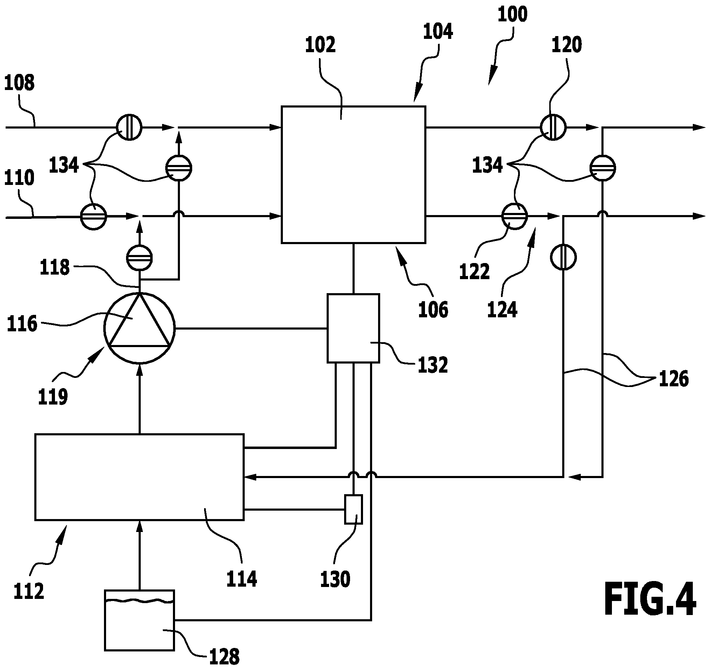

Der Heizbetrieb ist in Fig. 4 dargestellt.

In diesem Heizbetrieb wird der Füllstoff über das Kathodenauslassventil 122 und die Rückführleitung 126 von der Kathodenseite 106 des Brennstoffzellenstapels 102 entfernt und zurück zum Füllstoffbehälter 114 geführt.

Die Kathodenseite 106 wird dann über die Oxidatorzuführung 110 mit Oxidator versorgt.

In dem Brennstoffzellenstapel 102 befindet sich dann der Füllstoff und Oxidator.

Der Füllstoff enthält vorzugsweise chemisch reaktive Bestandteile. Insbesondere ist der Zusatzstoff ein Alkohol, beispielsweise Methanol oder Ethanol, welcher im Bereich der Membran-Elektroden-Anordnung des Brennstoffzellenstapels 102, gegebenenfalls katalytisch unterstützt, exotherm mit dem Oxidator reagiert.

Insbesondere diffundiert der Zusatzstoff des Füllstoffs vorzugsweise durch die Membran des Brennstoffzellenstapels 102 hindurch, so dass der Zusatzstoff von der Anodenseite 104 auf die Kathodenseite 106 gelangt und dort, gegebenenfalls katalytisch unterstützt, exotherm mit dem Oxidator reagiert.

Die Brennstoffzellenvorrichtung 100 wird dabei vorzugsweise noch nicht elektrisch belastet, sondern insbesondere in einem offenen Kreislauf betrieben (open circuit voltage). Es kann jedoch auch vorgesehen sein, dass die Brennstoffzellenvorrichtung 100 elektrisch belastet wird und hierbei insbesondere in einem Direktmethanolbetrieb oder Direktethanolbetrieb betrieben wird.

In jedem Fall ergibt sich durch die Reaktion des Zusatzstoffs mit dem Oxidator Wärme, welche zum Erhitzen des Brennstoffstapels 102 führt.

Die Brennstoffzellenvorrichtung 100 wird vorzugsweise solange in dem Heizbetrieb betrieben, bis der Brennstoffzellenstapel 102 eine Temperatur oberhalb des Gefrierpunkts von Wasser, insbesondere beispielsweise ungefähr +5°Celsius, vorzugsweise mindestens ungefähr +10°Celsius, aufweist.

Sobald die Temperatur ausreichend hoch ist, um die Brennstoffzellenvorrichtung 100 im Normalbetrieb betreiben zu können und dabei keine unerwünschte Beschädigung zu befürchten, wird der auf der Anodenseite 104 noch vorhandene Füllstoff über das Anodenauslassventil 120 und die Rückführleitung 126 zurück in den Füllstoffbehälter 114 geführt. Ferner wird dann über die Hauptbrennstoffzuführung 108 Hauptbrennstoff, insbesondere Wasserstoff, zu der Anodenseite 104 zugeführt, so dass die Brennstoffzellenvorrichtung 100 letztlich wieder in dem in Fig. 2 dargestellten Normalbetrieb betreibbar ist.

Mittels der Sensorvorrichtung 130 kann dann noch überprüft werden, ob die Durchführung des Vorbereitungsbetriebs und/oder des Heizbetriebs zu einer unerwünscht starken Konzentrationsabsenkung des Zusatzstoffs in dem Füllstoff geführt haben. Bei Bedarf kann dann Zusatzstoff aus dem Zusatzstoffbehälter 128 zu dem Füllstoffbehälter 114 zugeführt werden, um eine erwünschte Konzentration des Zusatzstoffs in dem Füllstoff wieder herzustellen.

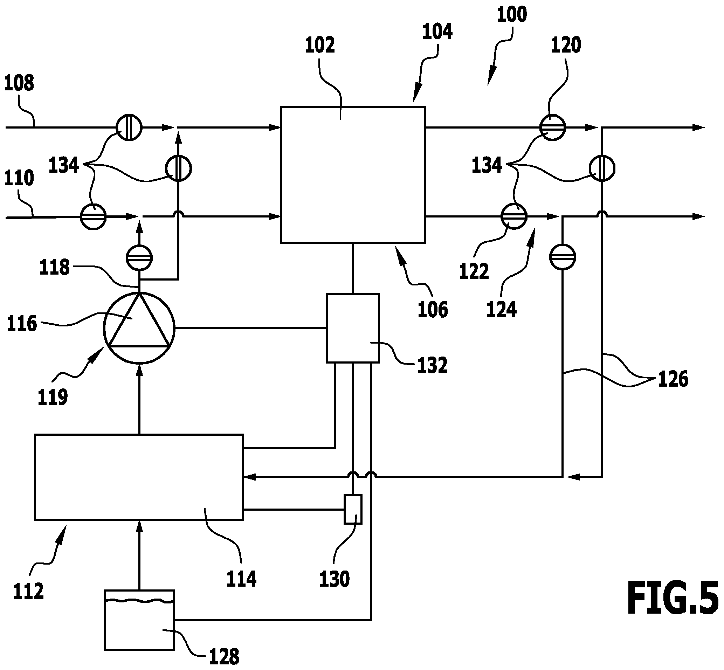

Der Leistungsbetrieb ist in Fig. 5 dargestellt.

In diesem Leistungsbetrieb wird der Füllstoff als Brennstoff der Brennstoffzellenvorrichtung 100 zur Erzeugung von elektrischer Energie und/oder zur Erzeugung von Wärme genutzt.

Die Füllvorrichtung 112 ist vorzugsweise wahlweise (a) in einem Füllbetrieb zum statischen Befüllen der Kathodenseite 106 und/oder der Anodenseite 104 und (b) in einem Umwälzbetrieb zum kontinuierlichen Umwälzen des der Kathodenseite 106 und/oder der Anodenseite 104 zugeführten Füllstoffs betreibbar, insbesondere gesteuert mittels der Steuervorrichtung 132.

In dem in Fig. 5 dargestellten Leistungsbetrieb wird die Füllvorrichtung 112 in einem Umwälzbetrieb betrieben, in welchem durch die Anodenseite 104 kontinuierlich Füllstoff hindurchgeführt wird, während auf der Kathodenseite 106 Oxidator zugeführt wird.

Die Anodenseite 104 wird somit kontinuierlich mit Zusatzstoff enthaltendem Füllstoff und somit mit Brennstoff versorgt, welcher dann elektrochemisch mit Oxidator umgesetzt wird. Hierdurch werden einerseits elektrische Energie und andererseits Wärme erzeugt.

Dadurch, dass die Brennstoffzellenvorrichtung 100 eine Füllvorrichtung 112 umfasst und wahlweise in dem Normalbetrieb, dem Vorbereitungsbetrieb, dem Heizbetrieb und/oder dem Leistungsbetrieb betreibbar ist, kann die Brennstoffzellenvorrichtung 100 auch bei sehr niedrigen Umgebungstemperaturen zuverlässig gelagert und/oder betrieben, insbesondere zuverlässig gestartet, werden.

### Bezugszeichenliste

- 100: Brennstoffzellenvorrichtung
- 102: Brennstoffzellenstapel (Brennstoffzellenstack)
- 104: Anodenseite
- 106: Kathodenseite
- 108: Hauptbrennstoffzuführung
- 110: Oxidatorzuführung
- 112: Füllvorrichtung
- 114: Füllstoffbehälter
- 116: Pumpe
- 118: Zuführleitung
- 119: Zuführvorrichtung
- 120: Anodenauslassventil
- 122: Kathodenauslassventil
- 124: Abführvorrichtung
- 126: Rückführleitung
- 128: Zusatzstoffbehälter
- 130: Sensorvorrichtung
- 132: Steuervorrichtung
- 134: Ventil

## Patentansprüche

1. Wasserstoff-Brennstoffzellenvorrichtung (100), umfassend
- eine Anodenseite (104), welcher in einem Normalbetrieb der Brennstoffzellenvorrichtung (100) ein Hauptbrennstoff zuführbar ist, wobei als Hauptbrennstoff Wasserstoff oder wasserstoffhaltiges Gas vorgesehen ist;
- eine Kathodenseite (106), welcher in dem Normalbetrieb Oxidator zuführbar ist;
- eine Steuervorrichtung (132), mittels welcher die Brennstoffzellenvorrichtung (100) wahlweise
(a) in den Normalbetrieb oder
(b) in einen Vorbereitungsbetrieb zur Vorbereitung der Brennstoffzellenvorrichtung (100) auf eine Abkühlung oder
(c) in einen Heizbetrieb zum Erwärmen der Brennstoffzellenvorrichtung (100)
versetzbar ist,
**dadurch gekennzeichnet,**
**dass** die Brennstoffzellenvorrichtung (100) eine Füllvorrichtung (112) zum Füllen der Anodenseite (104) und/oder der Kathodenseite (106) mit einem von dem Hauptbrennstoff und dem Oxidator verschiedenen Füllstoff, welcher eine Flüssigkeit ist, umfasst,
wobei in dem Vorbereitungsbetrieb die Anodenseite (104) und/oder die Kathodenseite (106) mit dem Füllstoff vollständig derart geflutet werden, dass der Oxidator und/oder der Hauptbrennstoff vollständig von der Kathodenseite (106) und/oder der Anodenseite (104) verdrängt werden, und
wobei in dem Heizbetrieb der Kathodenseite (106) Oxidator zuführbar oder zugeführt ist, so dass der Oxidator mit chemisch reaktiven Bestandteilen des Füllstoffs exotherm reagiert.

2. Brennstoffzellenvorrichtung (100) nach Anspruch 1, **dadurch gekennzeichnet, dass** die Brennstoffzellenvorrichtung (100) einen Füllstoffbehälter (114) umfasst, aus welchem der Füllstoff entnehmbar und der Kathodenseite (106) und/oder der Anodenseite (104) zuführbar ist und/oder in welchen der Füllstoff von der Kathodenseite (106) und/oder der Anodenseite (104) zurückführbar ist.

3. Brennstoffzellenvorrichtung (100) nach einem der Ansprüche 1 oder 2, **dadurch gekennzeichnet, dass** der Füllstoff ein Gemisch ist, welches Wasser und einen von Wasser verschiedenen Zusatzstoff umfasst oder durch Wasser und einen von Wasser verschiedenen Zusatzstoff gebildet ist.

4. Brennstoffzellenvorrichtung (100) nach Anspruch 3, **dadurch gekennzeichnet, dass** die Brennstoffzellenvorrichtung (100) einen Zusatzstoffbehälter (128) zur Aufnahme eines Zusatzstoffs umfasst, welcher zur Erhöhung einer Konzentration des Zusatzstoffs in dem Füllstoff einem Füllstoffbehälter (114) der Brennstoffzellenvorrichtung (100) zuführbar ist, insbesondere gesteuert und/oder geregelt mittels der Steuervorrichtung (132).

5. Brennstoffzellenvorrichtung (100) nach einem der Ansprüche 1 bis 4, **dadurch gekennzeichnet, dass** der Füllstoff und/oder ein Zusatzstoff, welcher Bestandteil des Füllstoffs ist, wasserlöslich ist und/oder einen im Vergleich zu Wasser oder als Gemisch mit Wasser geringeren Gefrierpunkt aufweist als Wasser.

6. Brennstoffzellenvorrichtung (100) nach einem der Ansprüche 1 bis 5, **dadurch gekennzeichnet, dass** der Füllstoff
a) ein Alkohol, insbesondere Methanol oder Ethanol, ist oder umfasst;
b) eine Flüssigkeit ist oder umfasst, welche insbesondere durch eine Brennstoffzellenmembran der Brennstoffzellenvorrichtung (100) hindurchdiffundieren kann; und/oder
c) einen Gefrierpunkt von weniger als ungefähr -20 °C, insbesondere weniger als ungefähr -40 °C, aufweist.

7. Brennstoffzellenvorrichtung (100) nach einem der Ansprüche 1 bis 6, **dadurch gekennzeichnet, dass** im Vorbereitungsbetrieb die Anodenseite (104) und/oder die Kathodenseite (106) abgesperrt oder absperrbar sind, so dass der Füllstoff nach dem Füllen der Anodenseite (104) und/oder der Kathodenseite (106) stationär auf der Anodenseite (104) und/oder auf der Kathodenseite (106) verbleibt.

8. Brennstoffzellenvorrichtung (100) nach einem der Ansprüche 1 bis 7, **dadurch gekennzeichnet, dass** die Brennstoffzellenvorrichtung (100) wahlweise ferner (d) in einem Leistungsbetrieb betreibbar ist, in welchem zur Erzeugung und/oder Bereitstellung von Wärme und elektrischer Energie Füllstoff elektrochemisch mit Oxidator umgesetzt wird.

9. Brennstoffzellenvorrichtung (100) nach Anspruch 8, **dadurch gekennzeichnet, dass** die Füllvorrichtung (112) in einem Umwälzbetrieb betreibbar ist, in welchem durch die Anodenseite (104) kontinuierlich Füllstoff hindurchgeführt wird, während der Kathodenseite (106) Oxidator zugeführt wird.

10. Verfahren zum Betreiben einer Wasserstoff-Brennstoffzellenvorrichtung (100), insbesondere einer Brennstoffzellenvorrichtung (100) nach einem der Ansprüche 1 bis 9, wobei das Verfahren Folgendes umfasst:
Wahlweises Betreiben der Brennstoffzellenvorrichtung (100)
(a) in einem Normalbetrieb oder
(b) in einem Vorbereitungsbetrieb zur Vorbereitung der Brennstoffzellenvorrichtung (100) auf eine Abkühlung oder
(c) in einem Heizbetrieb zum Erwärmen der Brennstoffzellenvorrichtung (100),
**dadurch gekennzeichnet, dass** in dem Vorbereitungsbetrieb die Anodenseite (104) und/oder die Kathodenseite (106) mit einem Füllstoff, welcher eine Flüssigkeit ist, vollständig geflutet werden, so dass ein im Normalbetrieb der Kathodenseite (106) zugeführter Oxidator und/oder ein im Normalbetrieb der Anodenseite (104) zugeführter Hauptbrennstoff vollständig von der Kathodenseite (106) und/oder der Anodenseite (104) verdrängt werden,
wobei in dem Heizbetrieb der Kathodenseite (106) Oxidator zugeführt wird, so dass der Oxidator mit chemisch reaktiven Bestandteilen des Füllstoffs exotherm reagiert.

11. Verfahren nach Anspruch 10, **dadurch gekennzeichnet, dass** in dem Heizbetrieb der Füllstoff nur von der Kathodenseite (106) abgelassen wird, bevor der Kathodenseite (106) Oxidator zugeführt wird.

12. Verfahren nach einem der Ansprüche 10 oder 11, **dadurch gekennzeichnet, dass** mittels einer Sensorvorrichtung (130) der Brennstoffzellenvorrichtung (100) eine Konzentration eines Zusatzstoffs in dem Füllstoff ermittelbar ist,
wobei vorzugsweise im Falle einer ermittelten zu geringen Konzentration des Zusatzstoffs in dem Füllstoff reiner oder hochkonzentrierter Zusatzstoff aus einem Zusatzstoffbehälter (128) einem Füllstoffbehälter (114) zugeführt wird.

13. Verfahren nach einem der Ansprüche 10 bis 12, **dadurch gekennzeichnet, dass** die Brennstoffzellenvorrichtung (100) wahlweise ferner (d) in einem Leistungsbetrieb betrieben wird, in welchem zur Erzeugung und/oder Bereitstellung von Wärme und elektrischer Energie Füllstoff elektrochemisch mit Oxidator umgesetzt wird,
wobei die Füllvorrichtung (112) vorzugsweise in einem Umwälzbetrieb betrieben wird, in welchem durch die Anodenseite (104) kontinuierlich Füllstoff hindurchgeführt wird, während der Kathodenseite (106) Oxidator zugeführt wird.

## Claims

1. Hydrogen fuel cell device (100), comprising
- an anode side (104) to which a main fuel is suppliable in a normal operation of the fuel cell device (100), wherein hydrogen or hydrogen-containing gas is provided as a main fuel;
- a cathode side (106) to which oxidant is suppliable in the normal operation;
- a control device (132) by means of which the fuel cell device (100) is selectively able to be set
(a) into the normal operation or
(b) into a preparation operation for preparing the fuel cell device (100) for a cooling or
(c) into a heating operation for heating the fuel cell device (100),
**characterized in that**
the fuel cell device (100) comprises a filling device (112) for filling the anode side (104) and/or the cathode side (106) with a filler which is different from the main fuel and the oxidant and which is a liquid, wherein in the preparation operation the anode side (104) and/or the cathode side (106) are completely flooded with the filler in such a way that the oxidant and/or the main fuel are completely displaced from the cathode side (106) and/or the anode side (104), and
wherein in the heating operation oxidant is suppliable or supplied to the cathode side (106), such that the oxidant exothermically reacts with chemically reactive constituents of the filler.

2. Fuel cell device (100) in accordance with Claim 1, **characterized in that** the fuel cell device (100) comprises a filler container (114) from which the filler is removable and is suppliable to the cathode side (106) and/or the anode side (104) and/or into which the filler is returnable from the cathode side (106) and/or the anode side (104).

3. Fuel cell device (100) in accordance with either one of Claims 1 or 2, **characterized in that** the filler is a mixture which comprises water and an additive which is different from water or is formed by water and an additive which is different from water.

4. Fuel cell device (100) in accordance with Claim 3, **characterized in that** the fuel cell device (100) comprises an additive container (128) for accommodating an additive which is suppliable, in particular controlled and/or regulated by means of the control device (132), to a filler container (114) of the fuel cell device (100) for increasing a concentration of the additive in the filler.

5. Fuel cell device (100) in accordance with any one of Claims 1 to 4, **characterized in that** the filler and/or an additive, which is a constituent of the filler, is water-soluble and/or has a lower freezing point than water in comparison to water or as a mixture with water.

6. Fuel cell device (100) in accordance with any one of Claims 1 to 5, **characterized in that** the filler
a) is or comprises an alcohol, in particular methanol or ethanol;
b) is or comprises a liquid which in particular can diffuse through a fuel cell membrane of the fuel cell device (100); and/or
c) has a freezing point of less than about -20 °C, in particular less than about -40 °C.

7. Fuel cell device (100) in accordance with any one of Claims 1 to 6, **characterized in that** in the preparation operation the anode side (104) and/or the cathode side (106) are blocked off or are able to be blocked off, such that after the filling of the anode side (104) and/or the cathode side (106), the filler remains stationary on the anode side (104) and/or on the cathode side (106).

8. Fuel cell device (100) in accordance with any one of Claims 1 to 7, **characterized in that** the fuel cell device (100) is selectively further operable (d) in a power operation in which filler is electrochemically reacted with oxidant for producing and/or providing heat and electrical energy.

9. Fuel cell device (100) in accordance with Claim 8, **characterized in that** the filling device (112) is operable in a circulation operation in which filler is continuously guided through the anode side (104), while oxidant is supplied to the cathode side (106).

10. Method for operating a hydrogen fuel cell device (100), in particular a fuel cell device (100) in accordance with any one of Claims 1 to 9, wherein the method comprises the following:
Selectively operating the fuel cell device (100)
(a) in a normal operation or
(b) in a preparation operation for preparing the fuel cell device (100) for a cooling or
(c) in a heating operation for heating the fuel cell device (100),
**characterized in that** in the preparation operation the anode side (104) and/or the cathode side (106) are completely flooded with a filler which is a liquid, such that an oxidant supplied to the cathode side (106) in the normal operation and/or a main fuel supplied to the anode side (104) in the normal operation are completely displaced from the cathode side (106) and/or the anode side (104),
wherein in the heating operation oxidant is supplied to the cathode side (106), such that the oxidant exothermically reacts with chemically reactive constituents of the filler.

11. Method in accordance with Claim 10, **characterized in that** in the heating operation the filler is discharged only from the cathode side (106) before oxidant is supplied to the cathode side (106).

12. Method in accordance with either one of Claims 10 or 11, **characterized in that** a concentration of an additive in the filler is determinable by means of a sensor device (130) of the fuel cell device (100),
wherein preferably in the case of a determined too low concentration of the additive in the filler, pure or highly-concentrated additive is supplied to a filler container (114) from an additive container (128).

13. Method in accordance with any one of Claims 10 to 12, **characterized in that** the fuel cell device (100) is selectively further operated (d) in a power operation in which filler is electrochemically reacted with oxidant for producing and/or providing heat and electrical energy,
wherein the filling device (112) is preferably operated in a circulating operation in which filler is continuously guided through the anode side (104), while oxidant is supplied to the cathode side (106).

## Revendications

1. Dispositif à pile à combustible à hydrogène (100), comprenant
- un côté anode (104), auquel un combustible principal peut être amené dans un mode normal du dispositif à pile à combustible (100), dans lequel de l'hydrogène ou un gaz contenant de l'hydrogène est prévu en tant que combustible principal ;
- un côté cathode (106), auquel un oxydant peut être amené dans le mode normal ;
- un dispositif de commande (132), au moyen duquel le dispositif à pile à combustible (100) peut être mis au choix
(a) dans le mode normal ou
(b) dans un mode de préparation pour la préparation du dispositif à pile à combustible (100) à un refroidissement ou
(c) dans un mode de chauffage pour le chauffage du dispositif à pile à combustible (100),
**caractérisé en ce**
**que** le dispositif à pile à combustible (100) comprend un dispositif de remplissage (112) pour le remplissage du côté anode (104) et/ou du côté cathode (106) avec un matériau de remplissage, qui est un liquide, différent du combustible principal et de l'oxydant,
dans lequel, dans le mode de préparation, le côté anode (104) et/ou le côté cathode (106) peuvent être complètement submergés avec le matériau de remplissage, de sorte que l'oxydant et/ou le combustible principal soient refoulés complètement du côté cathode (106) et/ou du côté anode (104), et
dans lequel, dans le mode de chauffage, un oxydant peut être amené ou est amené au côté cathode (106) de sorte que l'oxydant réagisse de manière exothermique avec des composants chimiquement réactifs du matériau de remplissage.

2. Dispositif à pile à combustible (100) selon la revendication 1, **caractérisé en ce que** le dispositif à pile à combustible (100) comprend un récipient de matériau de remplissage (114) duquel le matériau de remplissage peut être prélevé et être amené au côté cathode (106) et/ou au côté anode (104) et/ou dans lequel le matériau de remplissage peut être ramené du côté cathode (106) et/ou du côté anode (104).

3. Dispositif à pile à combustible (100) selon l'une quelconque des revendications 1 ou 2, **caractérisé en ce que** le matériau de remplissage est un mélange, lequel comprend de l'eau et un additif différent de l'eau ou est formé par l'eau et un additif différent de l'eau.

4. Dispositif à pile à combustible (100) selon la revendication 3, **caractérisé en ce que** le dispositif à pile à combustible (100) comprend un récipient d'additif (128) pour la réception d'un additif, lequel peut être amené à un récipient de matériau de remplissage (114) du dispositif à pile à combustible (100) pour l'augmentation d'une concentration de l'additif dans le matériau de remplissage, en particulier de manière commandée et/ou réglée au moyen du dispositif de commande (132).

5. Dispositif à pile à combustible (100) selon l'une quelconque des revendications 1 à 4, **caractérisé en ce que** le matériau de remplissage et/ou un additif, lequel fait partie du matériau de remplissage, est hydrosoluble et/ou présente, en tant que tel ou en tant que mélange avec de l'eau, un point de congélation qui est inférieur à celui de l'eau.

6. Dispositif à pile à combustible (100) selon l'une quelconque des revendications 1 à 5, **caractérisé en ce que** le matériau de remplissage
a) est ou comprend un alcool, en particulier du méthanol ou de l'éthanol ;
b) est ou comprend un liquide, lequel peut diffuser en particulier à travers une membrane de pile à combustible du dispositif à pile à combustible (100) ; et/ou
c) présente un point de congélation inférieur à environ -20 °C, en particulier inférieur à environ -40 °C.

7. Dispositif à pile à combustible (100) selon l'une quelconque des revendications 1 à 6, **caractérisé en ce que**, dans le mode de préparation, le côté anode (104) et/ou le côté cathode (106) sont obstrués ou peuvent être obstrués de sorte que le matériau de remplissage, après le remplissage du côté anode (104) et/ou du côté cathode (106), reste de manière stationnaire sur le côté anode (104) et/ou sur le côté cathode (106).

8. Dispositif à pile à combustible (100) selon l'une quelconque des revendications 1 à 7, **caractérisé en ce que** le dispositif à pile à combustible (100) peut fonctionner au choix en outre (d) dans un mode de performance, dans lequel un matériau de remplissage est transformé électrochimiquement avec un oxydant pour la génération et/ou la fourniture de chaleur et d'énergie électrique.

9. Dispositif à pile à combustible (100) selon la revendication 8, **caractérisé en ce que** le dispositif de remplissage (112) peut fonctionner dans un mode de circulation, dans lequel un matériau de remplissage est guidé en continu à travers le côté anode (104), pendant qu'un oxydant est amené au côté cathode (106).

10. Procédé de fonctionnement d'un dispositif à pile à combustible à hydrogène (100), en particulier d'un dispositif à pile à combustible (100) selon l'une quelconque des revendications 1 à 9, le procédé comprenant :
un fonctionnement au choix du dispositif à pile à combustible (100)
(a) dans un mode normal ou
(b) dans un mode de préparation pour la préparation du dispositif à pile à combustible (100) à un refroidissement ou
(c) dans un mode de chauffage pour le chauffage du dispositif à pile à combustible (100),
**caractérisé en ce que**, dans le mode de préparation, le côté anode (104) et/ou le côté cathode (106) sont complètement submergés avec un matériau de remplissage, qui est un liquide, de sorte qu'un oxydant amené au côté cathode (106) en mode normal et/ou un combustible principal amené au côté anode (104) en mode normal soient refoulés complètement du côté cathode (106) et/ou du côté anode (104),
dans lequel, dans le mode de chauffage, un oxydant est amené au côté cathode (106) de sorte que l'oxydant réagisse de manière exothermique avec des composants chimiquement réactifs du matériau de remplissage.

11. Procédé selon la revendication 10, **caractérisé en ce que**, dans le mode de chauffage, le matériau de remplissage n'est relâché que par le côté cathode (106), avant qu'un oxydant ne soit amené au côté cathode (106).

12. Procédé selon l'une quelconque des revendications 10 ou 11, **caractérisé en ce qu'**une concentration d'un additif dans le matériau de remplissage peut être déterminée au moyen d'un dispositif de capteur (130) du dispositif à pile à combustible (100),
dans lequel de préférence dans le cas où une concentration trop faible de l'additif dans le matériau de remplissage est détectée, un matériau de remplissage pur ou hautement concentré est amené d'un récipient d'additif (128) à un récipient de matériau de remplissage (114).

13. Procédé selon l'une quelconque des revendications 10 à 12, **caractérisé en ce que** le dispositif à pile à combustible (100) fonctionne au choix en outre (d) dans un mode de performance, dans lequel un matériau de remplissage est transformé électrochimiquement avec un oxydant pour la génération et/ou la fourniture de chaleur et d'énergie électrique,
dans lequel le dispositif de remplissage (112) fonctionne de préférence dans un mode de circulation, dans lequel un matériau de remplissage est guidé en continu à travers le côté anode (104), pendant qu'un oxydant est amené au côté cathode (106).
